(19) Europäisches Patentamt
European Patent Office
Office européen des brevets

(11) **EP 3 537 124 B1**

(12) **EUROPÄISCHE PATENTSCHRIFT**

(45) Veröffentlichungstag und Bekanntmachung des Hinweises auf die Patenterteilung:
**27.01.2021 Patentblatt 2021/04**

(51) Int Cl.:
***G01K 13/02*** *(2021.01)*  ***G01K 7/42*** *(2006.01)*

(21) Anmeldenummer: **18160815.9**

(22) Anmeldetag: **08.03.2018**

(54) **VERFAHREN UND SYSTEM ZUR NICHT-INTRUSIVEN ERMITTLUNG EINER TEMPERATUR EINES DURCH EINEN LEITUNGSABSCHNITT STRÖMENDEN FLUIDS**

METHOD AND SYSTEM FOR NON-INTRUSIVE DETERMINING OF A TEMPERATURE OF A FLUID FLOWING THROUGH A CONDUIT SECTION

PROCÉDÉ ET SYSTÈME DE DÉTERMINATION NON INTRUSIVE D'UNE TEMPÉRATURE D'UN FLUIDE COULANT À TRAVERS UNE SECTION DE CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.09.2019 Patentblatt 2019/37**

(73) Patentinhaber: **ABB Schweiz AG**
**5400 Baden (CH)**

(72) Erfinder:
• **Gebhardt, Jörg**
  **55130 Mainz (DE)**
• **Sosale, Guruprasad**
  **69469 Weinheim (DE)**
• **Decker, Andreas**
  **64293 Darmstadt (DE)**
• **Daake, Wilhelm**
  **32469 Petershagen (DE)**
• **Horstkotte, Jürgen**
  **32130 Enger (DE)**
• **Ude, Peter**
  **63457 Hanau (DE)**
• **Szász, Paul**
  **68723 Plankstadt (DE)**
• **Ahrend, Ulf**
  **76185 Karlsruhe (DE)**

(74) Vertreter: **Maiwald Patent- und Rechtsanwaltsgesellschaft mbH**
**Grünstraße 25**
**40212 Düsseldorf (DE)**

(56) Entgegenhaltungen:
EP-A1- 1 014 061      WO-A1-2017/131546
CN-B- 104 062 034     US-A1- 2008 163 692

**Beschreibung**

Die Erfindung betrifft ein Verfahren und ein System zur Ermittlung einer Temperatur eines durch einen

Leitungsabschnitt strömenden Fluids. Unter Fluiden werden mindestens aber nicht abschließend Flüssigkeiten, Gase und Schüttgüter verstanden.

Ein derartiges Verfahren ist beispielsweise aus der WO 2017/131546 A1 bekannt. Das darin beschriebene Verfahren zeichnet sich dadurch aus, dass zwischen einem Punkt, an dem die Umgebungstemperatur gemessen wird, und einem Punkt, an dem eine Oberflächentemperatur einer äußeren Oberfläche des Leitungsabschnittes gemessen wird, ein Schaft angeordnet ist, von dem der thermische Widerstand bekannt ist. Mit Hilfe des bekannten thermischen Widerstandes und der beiden gemessenen Temperaturen soll laut der Offenbarung ein Wärmestrom durch den Schaft und anhand des Wärmestroms die Temperatur des Fluids berechnet werden. Das beschriebene Verfahren hat jedoch den gravierenden Nachteil, daß die endliche Wärmeleitfähigkeit der Fluidgrenzschicht nicht berücksichtigt wird. Das in der Offenbarung beschriebene Verfahren liefert demnach zunächst nur einen Schätzwert für eine Temperatur an der Leitungs-Innenwand.

Für eine große Zahl von Fluiden und praxisrelevanten Anwendungsszenarien ist dieser Schätzwert jedoch von der mittleren Fluidtemperatur deutlich verschieden.

In vielen praktisch relevanten Fällen ist der thermische Widerstand der Fluidgrenzschicht wesentlich höher als derjenige des Leitungsabschnittes, beispielsweise einer Rohrwand.

Unter anderem dieser Nachteil soll mit der vorliegenden Erfindung behoben werden.

In der DE 10 2014 019 365 A1 wird eine Messvorrichtung zur Bestimmung einer Temperatur eines Mediums in einem Behälter oder in einer Leitung beschrieben. Die Messvorrichtung umfasst mindestens einen außen an einer Wandung des Behälters oder der Leitung angeordneten Temperaturfühler mit einem Ausgang für die von ihm registrierte Temperatur. Die Messvorrichtung berücksichtigt, dass die Wandung des Behälters oder der Leitung in der Übertragungsfunktion, mit der sich eine Änderung der Temperatur des Mediums auf die vom Temperaturfühler registrierte Temperatur fortpflanzt, in guter Näherung als PT1-Glied wirkt. Dadurch kann die Messvorrichtung einen wahren Temperatur-Zeit-Verlauf des Mediums erheblich genauer als gemäß dem Stand der Technik bestimmen. Ziel der technischen Lehre ist eine möglichst genaue und schnell ansprechende Schätzung der Behälter- oder Leitungs-Außentemperatur.

Aus der DE 10 2016 105 949 A1 ist eine nicht intrusive Temperaturmessvorrichtung zur Messung einer Fluidtemperatur in zumindest teilweise thermisch isolierten Rohren von Anlagen der Prozessindustrie bekannt. Darin wird ein nicht intrusiver Temperatursensor offenbart, mit dem ohne eine Beeinträchtigung einer thermischen Isolation der Rohre die Fluidtemperatur bestimmt werden kann. Hierzu weist die Messeinrichtung eine Sensorelektronik mit einem Temperatursensor und einer Verbindungselektronik mit einer Verarbeitungseinheit auf. Die Sensorelektronik ist innerhalb der das Rohr umschließenden thermischen Isolationsschicht und die Verbindungselektronik außerhalb dieser Isolationsschicht angeordnet. Die Messeinrichtung sieht vor, dass von der Sensorelektronik ein Temperaturmesswert drahtlos zur Verbindungselektronik übertragen wird. Ziel auch dieser technischen Lehre war es ausschließlich, einen guten Meßwert für die Leitungs-Oberflächentemperatur zu erhalten.

Ausgehend hiervon ist es die Aufgabe der vorliegenden Erfindung, ein Verfahren zur Ermittlung einer Temperatur eines durch einen Leitungsabschnitt strömenden Fluids der gattungsmäßigen Art dahingehend weiter zu verbessern, dass eine höhere Genauigkeit bei der Schätzung der wirklichen mittleren Fluidtemperatur erzielt wird.

Diese Aufgabe wird mit einem Verfahren mit den Merkmalen des Anspruches 1 und einem System mit den Merkmalen des Anspruches 17 gelöst. Vorteilhafte Ausgestaltungen des Verfahrens sind Gegenstand der abhängigen Ansprüche.

Die mit dem Verfahren ermittelte Temperatur des Fluids kann als eine über einen Querschnitt des Leitungsabschnittes gemittelte Temperatur des Fluids (vgl. [4]) betrachtet werden. Dabei endet der Querschnitt, was die Definition der mittleren Temperatur angeht, formal an der Innenseite der Leitungswand.

$T_m$ ist definiert durch den konvektiven Wärmefluß in der Leitung, und der lokale Fluß der Wärmekapazität wird als Gewichtsfunktion zur Bildung des Mittels genutzt:

$$T_m := \frac{\int_A T c_P \rho v \, dA}{\int_A c_P \rho v \, dA}$$

Dabei ist A die Querschnittsfläche des Fluids in dem Leitungsabschnitt, $v$ die ortsabhängige Strömungsgeschwindigkeit. $c_P$ bezeichnet die evtl ebenfalls ortsabhängige spezifische Wärmekapazität des Fluids pro Masse, $\rho$ die ortsabhängige Dichte.

Bei inkompressibler Strömung ($\rho$ = const) und konstanter Wärmekapazität $c_P$ ist die mittlere Temperatur sehr einfach mit dem konvektiven Wärmefluss $\dot{q}$, dem Massefluß $\dot{m}$ und dem Volumenfluß $\dot{V}$ verknüpft:

$$T_m := \frac{\dot{q}}{\dot{m}c_P} = \frac{\dot{q}}{\rho\dot{V}c_P}$$

Die Grenzschicht kann in Form einer laminaren Grenzschicht, einer turbulenten Grenzschicht oder einer Übergangsschicht, die Verhalten einer laminaren und/oder turbulenten Grenzschicht aufweist, vorliegen. Möglicherweise weist die Grenzschicht eine viskose Unterschicht auf. Der Vorteil des vorgeschlagenen Verfahrens besteht darin, dass das Wärmeübertragungsverhalten der Grenzschicht, insbesondere der thermische Widerstand der Grenzschicht, in eine Berechnung der Temperatur des Fluids mit einfließt und dadurch die Temperatur des Fluids genauer bestimmt werden kann.

Die Temperatur des Leitungsabschnittes ist vorzugsweise eine Oberflächentemperatur, welche an einer äußeren oder inneren Oberfläche des Leitungsabschnittes gemessen werden kann. Der Leitungsabschnitt kann ein Abschnitt eines Rohres mit einer Isolierung, beispielsweise in Form einer Mineralwolle- oder Polyethylenschaum-Isolierung, sein. Des Weiteren kann die innere Wand des Leitungsabschnittes beschichtet sein. Es ist von Vorteil, wenn die Temperatur des Leitungsabschnittes nicht an der äußeren Oberfläche des Leitungsabschnittes, sondern im Inneren, beispielsweise im Inneren der Isolierung, jedoch an der Außenwand der eigentlichen Fluidleitung, gemessen wird. Am einfachsten stellt sich die Messung der Temperatur des Leitungsabschnittes an der äußeren Oberfläche dar, da die äußere Oberfläche leicht zugänglich ist.

Die Referenztemperatur wird in einem Abstand von einem Punkt gemessen, an dem die Temperatur des Leitungsabschnittes erfasst wird, so dass zwischen diesem Punkt und einem weiteren Punkt, an welchem die Referenztemperatur gemessen wird, ein thermischer Widerstand der Umgebung $R_F$ ausgebildet ist. Der thermische Widerstand der Umgebung kann beispielsweise durch Luft und/oder durch einen Festkörper, wie einen Stab oder einer Teilschicht einer Isolationsschicht des Leitungsabschnittes, gebildet sein.

Die Stoffeigenschaft des Fluids kann eine Dichte $\rho$, eine dynamische Viskosität $\eta_f$, eine Wärmeleitfähigkeit $\lambda_f$, eine spezifische Wärmekapazität $c_p$, eine Prandtlzahl Pr und/oder ein Phasenzustand des Fluids sein. Die Zustandsgröße des Fluids kann ein Druck p oder eine Geschwindigkeit v sein.

Das Wärmeübertragungsverhalten der Grenzschicht wird vorzugsweise über eine Berechnung eines Wärmeübergangskoeffizienten $\alpha$, der von der Geschwindigkeit des Fluids in dem Leitungsabschnitt abhängt, und der Wärmeleitfähigkeit des Fluids berechnet.

Im Folgenden wird eine mögliche Variante zur Berechnung der Temperatur des Fluids beschrieben. Die physikalischen Prinzipien sind im wesentlichen bekannt, z.B. aus den Referenzen [1-5], und allgemein etwa aus der Thermodynamik von Wärmetauschern. Dabei wird in einem ersten Schritt gemäß nachfolgender Formel ein thermischer Widerstand $R_{bl}$ der Grenzschicht in Form eines Quotienten aus einem inneren hydraulischen Durchmesser des Leitungsabschnittes als Dividend und einem Produkt als Divisor berechnet. Das Produkt ergibt sich aus einer Multiplikation einer Nußeltzahl zur Beschreibung eines Strömungszustandes des Fluids in dem Leitungsabschnitt mit der Wärmeleitfähigkeit des Fluids.

$$R_{bl} = \frac{D}{Nu_D \cdot \lambda_f}, \ R_w = \frac{r_1}{\lambda_w}\log\frac{r_2}{r_1}\left(n\ddot{a}herungsweise\ \frac{r_2 - r_1}{\lambda_w}\ \text{für } r_2 - r_1 << r_1\right)$$

In einem zweiten Schritt wird ein thermischer Widerstand $R_w$ des Leitungsabschnittes, beispielsweise der Rohrwand, gemäß obiger Formel berechnet. Der thermische Widerstand des Leitungsabschnittes bezieht sich auf ein Wandsegment des Leitungsabschnittes zwischen einer Innenfläche und einer Außenfläche des Leitungsabschnittes. Statt einer oben gezeigten logarithmischen Berechnung in Abhängigkeit von einem inneren Radius $r_1$ und einem äußeren Radius $r_2$ des Leitungsabschnittes kann das Wärmeübertragungsverhalten des Leitungsabschnittes mit Hilfe einer linearen Approximation in Form einer Differenz zwischen dem äußeren und dem inneren Radius des Leitungsabschnittes durchgeführt werden. Wird der thermische Widerstand des Leitungsabschnittes jedoch mit Hilfe der Logarithmusfunktion mit dem Quotienten aus dem äußeren Durchmesser $r_2$ und dem inneren Durchmesser $r_1$ als Argument berechnet, so kann eine Wärmeverteilung innerhalb des Leitungsabschnittes genauer approximiert werden, wie es in [4] beschrieben ist.

Die Nußeltzahl Nu kann in einer Näherung für den Fall, dass das Fluid in einer turbulenten Strömung in dem Leitungsabschnitt strömt, beispielsweise wie folgt berechnet werden:

$$Nu = 0{,}037 \cdot Re^{0{,}8} \cdot Pr^{0{,}42},$$

wobei Re die Reynoldszahl und Pr die Prandtlzahl sind, wobei sich die Prandtlzahl Pr und die Reynoldszahl Re wie folgt berechnen:

$$\mathrm{Pr} = \eta_f \cdot \frac{c_p}{\lambda_f}, \ \mathrm{Re} = \rho_f \cdot U_f \cdot \frac{l}{\eta_f},$$

mit der dynamischen Viskosität $\eta_f$, der spezifischen Wärmekapazität $c_p$, der Wärmeleitfähigkeit des Fluids $\lambda_f$, der Geschwindigkeit des Fluids in dem Leitungsabschnitt $U_f$, der Dichte des Fluids $\rho_f$ und einer charakteristischen Länge l. Die Länge l kann vorteilhafterweise ein Durchmesser des Fluidquerschnitts sein, z.B der hydraulische Durchmesser d=4A/U. Dabei ist A der Fluidquerschnittsfläche und U die Länge des vom Fluid benetzten Leitungsumfangs. In der Literatur sind noch weitere Näherungsformeln für den funktionalen Zusammenhang Nu(Re, Pr, I, L) im Bereich turbulenter Strömung zu finden, wobei I den hydraulischen Leitungsdurchmesser und L die ungefähre Länge der geraden Einlaufstrecke vor der Meßstelle bezeichnet.

Im Falle von laminarer Strömung, also wenn ungefähr gilt: Re < 2300, kann für die Nußeltzahl geschrieben werden: Nu ≈ 3.66, insofern an der Außenhülle des Leiterstücks in etwa eine homogene Temperatur als Randbedingung angenommen werden kann (Dirichlet-Randbedingung). Ist im laminaren Strömungsfall die Randbedingung eher die eines konstanten Wärmeflusses (von-Neumann-Randbedingung), so gilt Nu ≈ 4.364.

Für den Fall einer Strömung im Übergangsbereich $2300<Re<10^4$ verwendet man vorteilhafterweise zum Beispiel eine lineare Interpolation zwischen dem in oben angegebener Weise angenommenen Wert für die laminare Nußeltzahl und dem sich aus der angenommenen Formel für den turbulenten Bereich ergebenden Nußeltzahl bei $Re=10^4$:

$$\mathrm{Nu_{trans}} \approx \ (1-x) \cdot \mathrm{Nu_{lam}} + x \cdot \ \mathrm{Nu_{turb}}(10^4), \ x := (Re-2300)/(10^4 - 2300)$$

In einem dritten Schritt kann die Temperatur des Fluids $T_M$ nach folgender Formel berechnet werden:

$$T_M = T_{wa}\left(1 + \frac{R_{bl} + R_w}{R_F}\right) - T_e \frac{R_{bl} + R_w}{R_F},$$

wobei $T_{wa}$ die Temperatur des Leitungsabschnittes, $T_e$ die Referenztemperatur und $R_F$ der thermische Widerstand der Umgebung ist. Die Umgebung erstreckt sich zwischen dem weiteren Punkt, an welchem die Referenztemperatur gemessen wird, und dem Punkt, an welchem die Temperatur des Leitungsabschnittes gemessen wird. Je nachdem, wo die Temperatur des Leitungsabschnittes gemessen wird, ist der thermische Widerstand der Umgebung $R_F$ unterschiedlich zu berechnen. Wird die Temperatur des Leitungsabschnittes beispielsweise zwischen der Oberfläche des Leitungsabschnittes und einer äußeren Oberfläche der Isolationsschicht des Leitungsabschnittes gemessen, so geht ein thermischer Widerstand eines Isolationsmaterials der Isolationsschicht mit in die Berechnung des thermischen Widerstandes $R_F$ mit ein.

In einer weiteren Variante kann auch ein Wärmestrom I, der von der Oberfläche des Leitungsabschnittes zu dem Punkt, an welchem die Referenztemperatur gemessen wird, fließt, ermittelt werden. Der Wärmestrom I kann wie folgt berechnet werden:

$$I = \frac{(T_{wa} - T_e)}{R_F},$$

Der Wärmestrom I kann als Zwischenergebnis für die Berechnung der Temperatur des Fluids benutzt werden. Alternativ kann der Wärmestrom auch durch eine Abschätzung, wie sie in der DE 10 2017 122 442.4 beschrieben ist, ermittelt werden.

Der Vorteil der Berechnung des Wärmeübertragungsverhaltens der Grenzschicht mit Hilfe der Nußeltzahl besteht darin, dass eine Abhängigkeit der Nußeltzahl von der Geschwindigkeit uf des Fluids, der Dichte und der dynamischen Viskosität $\eta_f$ des Fluids und der Prandtlzahl durch zahlreiche wissenschaftliche Experimente der vergangenen Jahrzehnte erforscht wurde und durch Verwendung der Nußeltzahl indirekt auf Ergebnisse dieser Experimente zurückgegriffen wird. Daher kann die Temperatur des Fluids genauer bestimmt werden, wenn die Nußeltzahl in die Berechnung der Temperatur des Fluids mit eingeht.

Zur Bestimmung der optimalen Nußeltzahl für den laminaren Bereich kann es vorteilhaft sein abzuschätzen, ob die Anwendungssituation eher Dirichlet- oder eher von Neumann-Randbedingungen oder einer speziellen Impedanz- oder Robin-Randbedingung entspricht. In Abhängigkeit davon wird vorteilhafterweise die laminare Nußeltzahl für die Messwertkorrektur eingestellt.

Eine bevorzugte Ausgestaltung des Verfahrens sieht vor, dass die Stoffeigenschaft des Fluids durch zumindest eine Messung bestimmt wird. So kann beispielsweise die Wärmeleitfähigkeit des Fluids stromaufwärts des Leitungsabschnittes durch die Messung bestimmt werden. Dies hat den Vorteil, dass die Stoffeigenschaft nicht manuell in ein System zur Berechnung der Temperatur des Fluids eingegeben werden muss. Des Weiteren kann mittels der Messung die Stoffeigenschaft genauer bestimmt werden, da das Fluid sich mit der Temperatur ändernde Stoffeigenschaften hat. In vorteilhafter Weise wird die Stoffeigenschaft mit Hilfe eines Messinstruments, welches in einer Anlage, in welcher der Leitungsabschnitt eingebaut ist, stromaufwärts von dem Leitungsabschnitt gemessen. Mit dem Messinstrument kann beispielsweise eine Reynoldszahl oder ein Druck des Fluids erfasst werden, wodurch indirekt eine Approximation der Stoffeigenschaft möglich ist.

Gemäß einer weiteren Ausgestaltung wird das Wärmeübertragungsverhalten des Leitungsabschnittes anhand einer Materialeigenschaft des Leitungsabschnittes bestimmt, wobei die Materialeigenschaft des Leitungsabschnittes, beispielsweise eine Wärmeleitfähigkeit $\lambda_w$ des Leitungsabschnittes, die durch zumindest eine Messung ermittelt wird.

Eine besonders vorteilhafte Ausgestaltung sieht vor, dass die Stoffeigenschaft des Fluids und/oder die Materialeigenschaft des Leitungsabschnittes mit Hilfe einer ersten Eingabeschnittstelle des Systems erfasst werden. Der Vorteil dieser Ausgestaltung liegt darin, dass ein Benutzer das vorgeschlagene Verfahren zur Ermittlung der Temperatur des Fluids an unterschiedlichen Anlagen und mit unterschiedlichen Fluiden ausführen kann. Dadurch gestaltet sich das Verfahren oder ein System, welches das Verfahren durchführt, sehr flexibel. Die Stoffeigenschaften können die oben genannten Stoffeigenschaften des Fluids, wie die Dichte, die dynamische Viskosität, die Wärmeleitfähigkeit, die spezifische Wärmekapazität usw. sein.

Eine weitere Verbesserung des Verfahrens kann vorsehen, dass ein Wert einer das Wärmeübertragungsverhalten des Leitungsabschnittes beeinflussenden Größe mit Hilfe der ersten oder einer zweiten Eingabeschnittstelle erfasst wird.

Diese Größe kann ein Durchmesser des Leitungsabschnittes, insbesondere ein hydraulischer Durchmesser, der mit Hilfe von Daten einer Querschnittsgeometrie des Leitungsabschnittes gewonnen wird, falls der Leitungsabschnitt nicht rund ist, eine Dicke einer Wand des Leitungsabschnittes, die Wärmeleitfähigkeit des Leitungsabschnittes $\lambda_w$, eine spezifische Wärmekapazität eines Materials des Leitungsabschnittes, eine Dicke einer Beschichtung des Leitungsabschnittes, eine Wärmeleitfähigkeit und/oder eine spezifische Wärmekapazität der Beschichtung, eine Dicke der Isolationsschicht, eine Wärmeleitfähigkeit und/oder eine spezifische Wärmekapazität der Isolationsschicht, ein Reibungskoeffizient, insbesondere ein Darcy-Moody-Weisbach-Reibungskoeffizient, der gemäß [3, 4] berechnet werden kann, oder ein Rauhigkeitsfaktor der inneren Wand des Leitungsabschnittes, der nach Nikuradse-Sand berechnet wird [5], sein.

Des Weiteren kann vorteilhaft vorgesehen sein, dass ein Wert einer Prozessgröße eines Prozesses, in welchem das Fluid als Medium verwendet wird, mit Hilfe der ersten, zweiten oder einer dritten Eingabeschnittstelle erfasst und die Temperatur des Fluids mit Hilfe des Wertes der Prozessgröße berechnet wird. Dabei kann die Prozessgröße die Reynoldszahl, die Prandtlzahl oder die Nußeltzahl einer durch das Fluid gebildeten Strömung sein.

Der Vorteil bei einer Verwendung der Prozessgröße ist, dass ein Modell, welches beispielsweise zur Berechnung des Wärmeübertragungsverhaltens der Grenzschicht verwendet wird, den Wert der Prozessgröße als Eingangsgröße haben kann. Dabei kann der Wert der Prozessgröße mehrere Werte von Stoffeigenschaften des Fluids und/oder von das Wärmeübertragungsverhalten des Leitungsabschnittes beeinflussenden Größen ersetzen. Dadurch kann eine Anzahl von zu erfassenden Eingangswerten des Modells reduziert werden, wodurch eine Dimension eines Parameterraums, der durch Parameter wie die Stoffeigenschaften des Fluids und der das Wärmeübertragungsverhalten des Leitungsabschnittes beeinflussenden Größen gebildet wird, reduziert wird. Eine geringere Dimension des Parameterraums vereinfacht es, das Modell zu erzeugen und mit dem Modell eine Approximation des Wärmeübertragungsverhaltens der Grenzschicht durchzuführen.

Eine vorteilhafte Weiterbildung sieht vor, dass eine Neigung des Leitungsabschnittes erfasst wird und in Abhängigkeit der Neigung eine Warnung für einen Benutzer ausgegeben wird. Die Warnung enthält eine Information über eine Genauigkeit der ermittelten Temperatur des Fluids. Dies ermöglicht es, dem Benutzer eine Entscheidungsgrundlage zu geben, ob die ermittelte Temperatur des Fluids ungenau ermittelt wird.

In einer weiteren Variante kann vorgesehen sein, dass eine Angabe zur Typisierung des Fluids erfasst wird und die Stoffeigenschaft des Fluids mit Hilfe der Angabe bestimmt wird. Die Angabe kann beispielsweise eine Art des Fluids sein. So kann mit Hilfe der Eingabeschnittstelle oder einer vierten Eingabeschnittstelle ein Wort wie beispielsweise "Öl" eingelesen werden, was die Angabe zur Typisierung sein kann. In diesem Fall werden vorteilhaft sämtliche Stoffeigenschaften von Öl aus einer Datenbank ausgelesen, wodurch auf einfache Weise Informationen zur Ermittlung der Stoffeigenschaften des Fluides bereitgestellt werden können.

Besonders vorteilhaft wird die Stoffeigenschaft des Fluids temperaturabhängig bestimmt, wodurch eine höhere Genauigkeit erzielt werden kann.

Nach einer Weiterbildung des Verfahrens kann die Stoffeigenschaft des Fluids in Abhängigkeit einer geschätzten Temperatur des Fluids, insbesondere anhand der Temperatur des Leitungsabschnittes, ermittelt und die Temperatur des Fluids zunächst in Abhängigkeit der geschätzten Temperatur bestimmt werden. Die geschätzte Temperatur wird bevorzugt in Abhängigkeit einer Schätzfunktion, die die Temperatur des Leitungsabschnittes und/oder die Referenztemperatur als Argument hat, ermittelt. Die Temperatur des Fluids wird mit den in Abhängigkeit von der geschätzten Temperatur bestimmten Stoffeigenschaften des Fluids nach einer der oben genannten Varianten ermittelt. Die derart ermittelte Temperatur des Fluids kann anschließend dazu verwendet werden, die Stoffeigenschaften in Abhängigkeit von dieser berechneten Temperatur des Fluids erneut zu berechnen. Mit den derart neu bestimmten Stoffeigenschaften des Fluids kann die Temperatur des Fluids erneut ermittelt werden. Vorteilhafterweise wird eine Differenz zwischen der erneut ermittelten Temperatur des Fluids und der zuvor ermittelten Temperatur des Fluids mit Hilfe einer Ausgabeeinheit ausgegeben.

Bevorzugt erfolgt die Ermittlung der Temperatur des Fluids über eine vorherige Bestimmung eines Wärmestroms durch die Grenzschicht und die Wand des Leitungsabschnittes.

Eine besonders genaue Variante des Verfahrens sieht vor, dass ein Wert der die Strömung des Fluids beschreibenden Reynoldszahl ermittelt wird, und in Abhängigkeit des Wertes der Reynoldszahl eines von zumindest zwei verschiedenen Modellen zur Berechnung der Nußeltzahl verwendet wird. Die Reynoldszahl kann hierbei wie oben beschrieben berechnet werden.

Vorteilhaft wird für Werte der Reynoldszahl kleiner als etwa 2300 ein erstes Modell zur Berechnung der Nußeltzahl bei einer laminaren Strömung, für Werte der Reynoldszahl etwa zwischen 2300 und 10000 ein zweites Modell zur Berechnung der Nußeltzahl für eine Strömung in einem Übergangsbereich und für Werte der Reynoldszahl größer als etwa 10000 ein drittes Modell zur Berechnung der Nußeltzahl für turbulente Strömungen verwendet. Um für unterschiedliche Anwendungsfälle ein passendes der zumindest zwei verschiedenen Modelle auszuwählen, ist vorteilhaft vorgesehen, eine experimentelle Kalibrierung der verschiedenen Modelle, d.h. dem ersten, zweiten und dritten Modell, durchzuführen. Mithilfe der Methode der Fuzzy-Logik können auch Ergebnisse von zumindest zwei der verschiedenen Modelle in die Berechnung der Nußeltzahl mit einfließen.

Die Temperatur des Leitungsabschnittes wird vorteilhaft mit einem Temperatursensor gemessen. Hierbei kann eine in der DE 10 2014 012 086 A1 beschriebene Anlegertemperaturfühlervorrichtung verwendet werden, bei welcher eine Verringerung eines Wärmeaustausches einer Anzapffläche eines an dem Leitungsabschnitt anliegenden Temperatursensors erreicht wird. Des Weiteren kann ein in der DE 10 2017 122 442.4 beschriebener doppelter Sensor für eine genaue Messung der Temperatur des Leitungsabschnittes benutzt werden.

Eine weitere Variante kann vorsehen, die Temperatur des Leitungsabschnittes mit Hilfe eines Temperaturmodells zu modellieren. Hierbei kann vorteilhaft auf Datenbanken zurückgegriffen werden. Die Datenbanken geben bevorzugt in Abhängigkeit von verschiedenen Betriebspunkten der Anlage, in welcher der Leitungsabschnitt angeordnet ist, eine Temperatur des Leitungsabschnittes an. Die Referenztemperatur ist bevorzugt eine Umgebungstemperatur, die mit Hilfe eines Sensors, der in einem Gehäuse einer Auswertungseinheit oder in einer freien Umgebung angeordnet ist, gemessen werden.

Zur Lösung der Aufgabe wird weiterhin ein System zur Ermittlung einer Temperatur eines durch einen Leitungsabschnitt strömenden Fluids vorgeschlagen. Das System weist eine Auswertungseinheit und einen ersten Temperatursensor auf, wobei die Auswertungseinheit dazu eingerichtet ist, eine Temperatur des Leitungsabschnittes zu erfassen, eine mithilfe des ersten Temperatursensors in einem Abstand von einer Oberfläche des Leitungsabschnittes gemessene Referenztemperatur zu erfassen, ein Wärmeübertragungsverhalten, insbesondere einen thermischen Widerstand, einer Grenzschicht des Fluids an einer inneren Wand des Leitungsabschnittes anhand von zumindest einer Stoffeigenschaft und zumindest eines Wertes einer Zustandsgröße des Fluids zu ermitteln und die Temperatur des Fluids anhand des Wärmeübertragungsverhaltens der Grenzschicht, eines Wärmeübertragungsverhaltens, insbesondere eines thermischen Widerstandes, des Leitungsabschnittes, der Temperatur des Leitungsabschnittes und der Referenztemperatur zu ermitteln.

Weitere Vorteile, Merkmale und Einzelheiten der Erfindung ergeben sich aus der nachfolgenden Beschreibung sowie anhand der Figuren. Dabei bezeichnet ein mehrfach verwendetes Bezugszeichen dieselbe Komponente. Die Figuren zeigen schematisch in:

Fig. 1    Schritte eines Verfahrens zur Bestimmung einer Temperatur eines durch einen Leitungsabschnitt strömenden Fluides,

Fig. 2    einen Leitungsabschnitt, ein Fluid mit einer Grenzschicht an einer inneren Wand des Leitungsabschnittes,

Fig. 3    ein thermisches Netzwerk mit einem thermischen Widerstand der Grenzschicht nach Fig. 2,

Fig. 4    eine Auswertungseinheit zur Bestimmung der Temperatur des Fluids nach Fig. 2,

Fig. 5    ein Modell zur Bestimmung zumindest einer Stoffeigenschaft des Fluides nach Fig. 2 in Abhängigkeit einer geschätzten Temperatur,

Fig. 6    das Modell zur Bestimmung zumindest einer Stoffeigenschaft des Fluides nach Fig. 5 in Abhängigkeit einer Temperatur des Fluids nach Fig. 2.

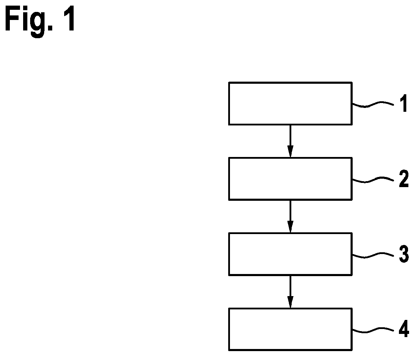

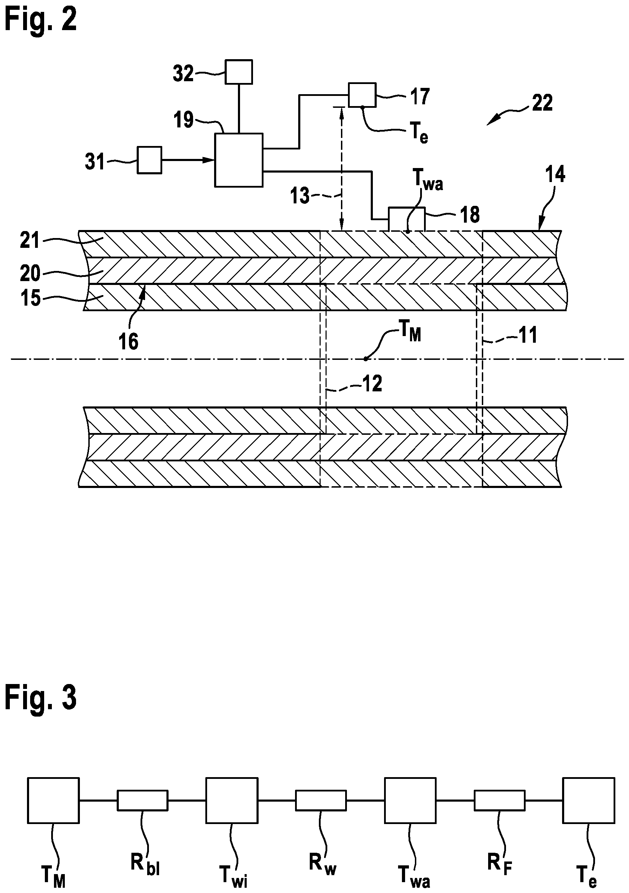

Fig. 1 zeigt Schritte eines Verfahrens zur Ermittlung einer Temperatur $T_M$, eines durch einen Leitungsabschnitt **11**, welcher in Fig. 2 gezeigt ist, strömenden Fluids **12**. In einem ersten Schritt **1** wird eine Temperatur $T_{wa}$ des Leitungsabschnittes **11** bestimmt. In einem zweiten Schritt **2** wird eine Referenztemperatur $T_e$ in einem Abstand einer Oberfläche **14** des Leitungsabschnittes **11** erfasst. In einem dritten Schritt **3** wird ein Wärmeübertragungsverhalten, insbesondere ein thermischer Widerstand, einer Grenzschicht **15** des Fluids **12** an einer inneren Wand **16** des Leitungsabschnittes **11** anhand von zumindest einer Stoffeigenschaft und zumindest eines Wertes einer Zustandsgröße des Fluids **12** ermittelt.

In einem vierten Schritt **4** wird die Temperatur $T_M$ des Fluids **12** anhand des Wärmeübertragungsverhaltens der Grenzschicht **15,** eines Wärmeübertragungsverhaltens, insbesondere eines thermischen Widerstandes des Leitungsabschnittes **11**, der Temperatur $T_{wa}$ des Leitungsabschnittes und der Referenztemperatur $T_e$, ermittelt. Die Referenztemperatur $T_e$ wird vorzugsweise mit Hilfe eines ersten Temperatursensors **17** und die Temperatur $T_{wa}$ des Leitungsabschnittes **11** mit Hilfe eines zweiten Temperatursensors **18** gemessen. Der erste Temperatursensor **17** ist mit einem Abstand **13** zu dem zweiten Temperatursensor **18** angeordnet. Die mit dem ersten Temperatursensor **17** und dem zweiten Temperatursensor **18** gemessenen Temperaturwerte werden an eine Auswertungseinheit **19** weitergeleitet. Die Auswertungseinheit **19,** der erste Temperatursensor **17,** der zweite Temperatursensor **18** bilden ein System **22** zur Ermittlung der Temperatur des Fluids **12** aus.

In Fig. 3 ist vereinfacht ein thermisches Netzwerk dargestellt, welches sich zwischen einem Ort, an dem die Temperatur $T_M$ des Fluids herrscht, und einem Ort, an dem die Referenztemperatur $T_e$ gemessen wird, erstreckt. Ausgehend von dem Ort, an dem die Temperatur $T_M$ des Fluids **12** herrscht, wird strömt ein Wärmestrom durch die Grenzschicht **15,** durch eine Wand **20** des Leitungsabschnittes **11,** bevorzugt durch eine Isolationsschicht **21,** und durch ein sich zwischen einem Ort, an dem die Temperatur $T_{wa}$ des Leitungsabschnittes **11** gemessen wird, und dem Ort, an dem die Referenztemperatur $T_e$ gemessen wird, erstreckendes Medium hin zu dem Ort, an dem die Referenztemperatur $T_e$ erfasst wird. Dabei bilden entsprechend die Grenzschicht **15** einen thermischen Widerstand $R_{bl}$ der Grenzschicht **15,** die Wand **20** und die Isolationsschicht **21** einen thermischen Widerstand $R_w$ des Leitungsabschnittes **11** und das sich zwischen der Isolationsschicht **21** und dem Ort, an dem die Referenztemperatur $T_e$ erfasst wird, erstreckende Medium einen thermischen Widerstand einer Umgebung $R_F$ aus.

Der Wärmestrom I kann nach der oben beschriebenen Formel berechnet werden. Möglich ist, dass abweichend von der in Fig. 2 dargestellten Variante die Temperatur $T_{wa}$ des Leitungsabschnittes **11** der innerhalb der Wand **20** oder innerhalb der Isolationsschicht **21** erfasst wird. In diesem Fall berechnet sich der thermische Widerstand des Leitungsabschnittes **RW** und der thermische Widerstand der Umgebung $R_F$, die sich zwischen dem Ort, an dem die Temperatur $T_{wa}$ des Leitungsabschnittes **11** erfasst wird, und dem Ort, an dem die Referenztemperatur $T_e$ erfasst wird, erstreckt, entsprechend auf andere Weise. Die Temperatur $T_M$ des Fluids **12** wird bevorzugt nach einer der oben stehenden Formeln ermittelt.

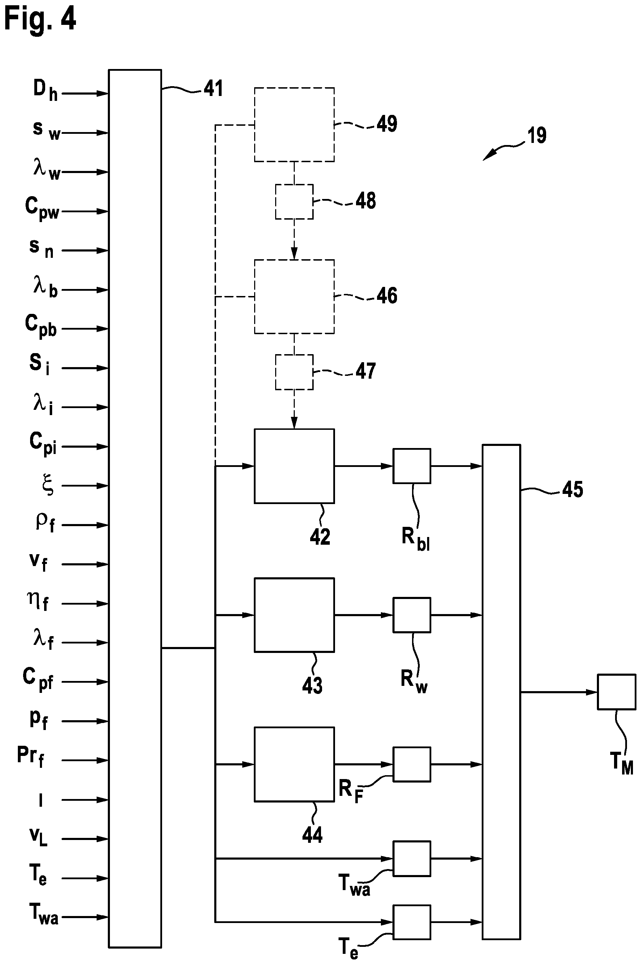

Fig. 4 zeigt ein Ausführungsbeispiel der Auswertungseinheit **19**, die zumindest anhand der erfassten Temperaturen $T_e$ und $T_{wa}$ die Temperatur $T_M$ des Fluids **12** ermittelt. Bevorzugt weist die Auswertungseinheit **19** eine Schnittstelle **41** auf, die zumindest einen Wert zumindest einer Eingangsgröße einliest. Vorteilhafterweise liest die Schnittstelle **41** mehrere Werte von jeweils mehreren Eingangsgrößen ein.

Die Eingangsgrößen können einen hydraulischen Durchmesser $D_H$ des Leitungsabschnittes **11**, eine Dicke $s_w$ der Wand **20**, eine Wärmeleitfähigkeit $\lambda_w$ der Wand **20**, eine spezifische Wärmekapazität $C_{pw}$ der Wand **20**, eine Dicke $s_b$ einer in Fig. 2 nicht gezeigten Beschichtung auf der inneren Wand **16**, eine Wärmeleitfähigkeit $\lambda_b$ der Beschichtung, eine spezifische Wärmekapazität $C_{pb}$ der Beschichtung, eine Dicke $s_i$ der Isolationsschicht **21**, eine Wärmeleitfähigkeit $\lambda_i$ der Isolationsschicht **21**, eine spezifische Wärmekapazität $C_{pi}$ der Isolationsschicht **21**, einen Rauhigkeitskoeffizienten $\xi$, eine Oberfläche der inneren Wand **16**, eine Dichte $\rho_f$ **des** Fluids **12**, eine Geschwindigkeit $v_f$ des Fluids **12**, eine dynamische Viskosität $\eta_f$ des Fluids **12**, eine Wärmeleitfähigkeit $\lambda_f$ des Fluids **12**, eine spezifische Wärmekapazität $C_{pf}$ des Fluids **12**, ein Druck $p_f$ des Fluids **12**, eine Prandtlzahl $Pr_f$ des Fluids **12**, ein Abstand I zwischen dem Ort, an dem die Temperatur $T_{wa}$ des Leitungsabschnittes **11** gemessen wird, und einem Ort, an welchem das Fluid **12** in ein Rohr, welches den Leitungsabschnitt **11** aufweist, eintritt, eine Geschwindigkeit $v_L$ einer den Leitungsabschnitt **11** umströmenden Luft, die Referenztemperatur $T_e$ und/oder die Temperatur $T_{wa}$ des Leitungsabschnittes **11** umfassen.

Die Auswertungseinheit **19** weist bevorzugt ein erstes Modell **42** zur Berechnung des thermischen Widerstandes $R_{bl}$, einen zweiten Modell **43** zur Berechnung des thermischen Widerstandes $R_w$ und ein drittes Modell **44** zur Berechnung des thermischen Widerstandes $R_F$ auf.

Die Schnittstelle **41** stellt für das erste, zweite und dritte Modell **42, 43, 44** die Eingangsgrößen zur Berechnung der jeweiligen thermischen Widerstände bereit. So berechnet beispielsweise das erste Modell **42** den thermischen Widerstand $R_{bl}$ der Grenzschicht **15** in Abhängigkeit von dem hydraulischen Durchmesser $D_h$, dem Rauhigkeitskoeffizienten $\xi$, der Dichte des Fluides $\rho_f$, der Geschwindigkeit des Fluides $v_f$, der dynamischen Viskosität $\eta_f$, der Wärmeleitfähigkeit $\lambda_f$, der spezifischen Wärmekapazität $C_{pf}$, der Prandtlzahl $Pr_f$, dem Abstand I und bevorzugt dem Druck $p_f$.

Das zweite Modell **43** berechnet den thermischen Widerstand **RW** vorzugsweise in Abhängigkeit von der Dicke $s_w$ der Wand, der Wärmeleitfähigkeit $\lambda_w$, der spezifischen Wärmekapazität $C_{pw}$, der Dicke der Beschichtung $s_b$, der Wärmeleitfähigkeit $\lambda_b$ der Beschichtung, der spezifischen Wärmekapazität $C_{pb}$ der Beschichtung, der Dicke $s_i$ der Isolationsschicht, der Wärmeleitfähigkeit $\lambda_i$ der Isolationsschicht und der spezifischen Wärmekapazität $C_{pi}$ der Isolationsschicht. Das dritte Modell **44** berechnet den thermischen Widerstand $R_F$ bevorzugt in Abhängigkeit von dem Abstand **13**, der Geschwindigkeit $v_L$ der Luft und der Referenztemperatur $T_e$. In Abhängigkeit von den thermischen Widerständen $R_{bl}$, $R_W$, $R_F$ und der erfassten Temperaturen $T_{wa}$ und $T_e$ errechnet ein Rechenmodul **45** der Auswertungseinheit **19** vorzugsweise nach oben genannter Formel die Temperatur $T_M$ des Fluids **12** aus.

Zur Berechnung des thermischen Widerstandes $R_{bl}$ der Grenzschicht **15** kann das erste Modell **42** vorteilhafterweise als Eingangsgröße eine mit einem vierten Modell **46** berechnete Nußeltzahl **47** aufweisen. Die Nußeltzahl **47** kann mit Hilfe des vierten Modells **46** auch in einer besonders bevorzugten Variante in Abhängigkeit von einer mit einem fünften Modell **49** berechneten Reynoldszahl **48** berechnet werden. Das vierte Modell **46** sieht vorzugsweise eine Fallunterscheidung in Abhängigkeit von eines Wertes der berechneten Reynoldszahl **48** vor. Je nach Wert der Reynoldszahl **48** kann dabei das vierte Modell **46** Rechenergebnisse des oben genannten ersten, zweiten und/oder dritten Modells zur Berechnung der Nußeltzahl verwenden.

Die in Fig. 4 gezeigten Eingangsgrößen der Schnittstelle **41** können in einer ersten Variante mit Hilfe einer Eingabeschnittstelle **31** manuell eingegeben werden. In einer zweiten Variante kann ein Großteil der Eingangsgrößen der Schnittstelle **41** anhand von mit der Auswertungseinheit **19** verbundenen Datenbanken **32** berechnet werden. Eine spezielle Variante des vorgeschlagenen Verfahrens sieht vor, dass mit Hilfe der Eingabeschnittstelle **31** eine Angabe **51** zur Typisierung des Fluids **12** erfasst wird und zumindest eine der Stoffeigenschaften des Fluids **12** mit Hilfe der Angabe **51** bestimmt wird. In vorteilhafter Weise wird die Stoffeigenschaft des Fluids weiterhin in Abhängigkeit von einer geschätzten Temperatur $T_g$ des Fluids **12** ermittelt. Dabei kann die geschätzte Temperatur $T_g$ gleich der gemessenen Temperatur $T_{wa}$ des Leitungsabschnittes **11** sein.

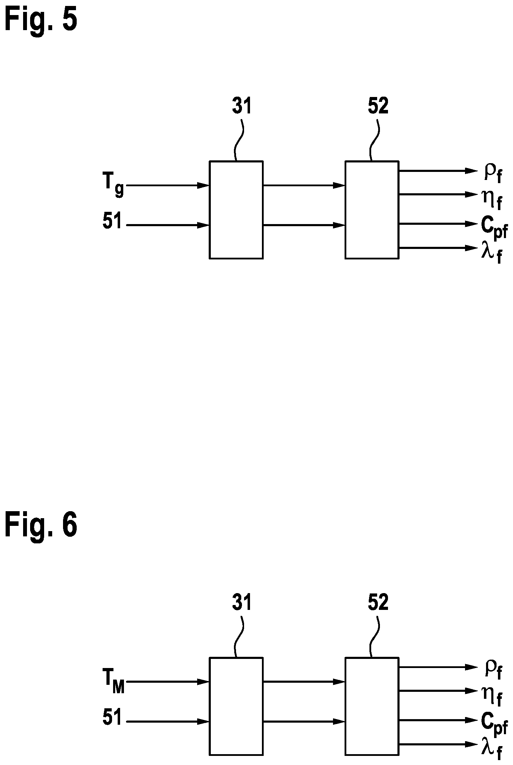

Fig. 5 zeigt eine Variante, bei welcher ein sechstes Modell **52** der Auswertungseinheit **19** in Abhängigkeit von der geschätzten Temperatur $T_g$ und der Angabe **51** die Dichte $\rho_f$, die dynamische Viskosität $\eta_f$, die spezifische Wärmekapazität $c_{pf}$ und die Wärmeleitfähigkeit $\lambda_f$ des Fluids **12** berechnet. Für diese Berechnung können im Stand der Technik bekannte Tabellen verwendet werden. Eine besonders genaue Form des vorgeschlagenen Verfahrens sieht vor, dass zunächst zumindest eine Stoffeigenschaft in Abhängigkeit von der geschätzten Temperatur $T_g$ berechnet und im Anschluss daran die Temperatur $T_M$ des Fluids **12** in Abhängigkeit von dieser Stoffeigenschaft nach dem oben beschriebenen Verfahren ermittelt wird. Im Anschluss daran sieht das verbesserte Verfahren vor, zumindest eine Stoffeigenschaft des Fluids **12** anhand der ermittelten Temperatur $T_M$ des Fluids **12** neu zu berechnen. Die Berechnung von Stoffeigenschaften des Fluids **12** in Abhängigkeit der Temperatur kann gemäß [1] erfolgen.

Fig. 6 zeigt, wie das sechste Modell **52** in Abhängigkeit von der berechneten Temperatur $T_M$ des Fluids **12** die Dichte $\rho_f$, die dynamische Viskosität $\eta_f$, die spezifische Wärmekapazität $c_{pf}$ und die Wärmeleitfähigkeit $\lambda_f$ des Fluids **12** neu berechnet. In Abhängigkeit von diesen neu berechneten Stoffeigenschaften des Fluids **12** kann erneut die Temperatur $T_M$ des Fluids **12** mit Hilfe des oben beschriebenen Verfahrens berechnet werden. Diese wiederholte Berechnung der Temperatur $T_M$ des Fluids **12** kann iterativ so lange durchgeführt werden, bis eine Änderung der Temperatur $T_M$ des Fluids **12** unter einem vorgegebenen Schwellwert liegt. Die Angabe **51** zur Typisierung kann beispielsweise in Form eines Strings, beispielsweise "Öl", ausgebildet sein. Die Eingabeschnittstelle **31** wertet die Angabe **51** derart aus, dass entsprechende Formeln zur Berechnung der Stoffeigenschaften eines Fluids, welches mit Hilfe der Angabe **51** spezifiziert wird, zur Berechnung der Stoffeigenschaften des Fluids **12** aus einer Stoffdatenbank ausgelesen und zur Berechnung verwendet werden.

## Quellenverzeichnis

[1] Volker Gnielinski. New equations for heat and mass transfer in turbulent pipe and channel flow. International chemical engineering, AIAA Journal, 16(2):359-368, April 1976.

[2] Volker Gnielinski. Ein neues Berechnungsverfahren für die Wärmeübertragung im Übergangsbereich zwischen laminarer und turbulenter Strömung. Forschung im Ingenieurwesen-Engineering Research, 61(9):240-248, 1995.

[3] VDI-Wärmeatlas. Druckverlust in durchströmten Rohren (section Lab1). Springer-Verlag, Berlin-Heidelberg, 2006

[4] Theodore L. Bergman, Adrienne S. Lavine, and Frank P. Fundamentals of Heat and Mass Transfer. John Wiley & Sons, 7th edition, 2011.

[5] Strömungsgesetze in rauhen Rohren, Nikuradse, Forschung auf dem Gebiet des Ingenieurwesens, 1933, NACA Technical Memorandum 1292.

**Bezugszeichenliste**

| | |
|---|---|
| 1 | erster Schritt |
| 2 | zweiter Schritt |
| 3 | dritter Schritt |
| 4 | vierter Schritt |
| 11 | Leitungsabschnitt |
| 12 | Fluid |
| 13 | Abstand |
| 14 | Oberfläche |
| 15 | Grenzschicht |
| 16 | innere Wand des Leitungsabschnittes |
| 17 | erster Temperatursensor |
| 18 | zweiter Temperatursensor |
| 19 | Auswertungseinheit |
| 20 | Wand |
| 21 | Isolationsschicht |
| 22 | System |
| 31 | Eingabeschnittstelle |
| 32 | Datenbanken |
| 41 | Schnittstelle |
| 42 | erstes Modell |
| 43 | zweites Modell |
| 44 | drittes Modell |
| 45 | Rechenmodul |
| 46 | viertes Modell |
| 47 | Nußeltzahl |
| 48 | Reynoldszahl |
| 49 | fünftes Modell |
| 51 | Angabe |
| 52 | sechste Modell |

**Patentansprüche**

1. Verfahren zur nicht-intrusiven Ermittlung einer Temperatur eines durch einen Leitungsabschnitt (11) strömenden Fluids (12), wobei:

   - eine Temperatur des Leitungsabschnittes (11) bestimmt wird,
   - eine Referenztemperatur in einem Abstand (13) von einer Oberfläche (14) des Leitungsabschnittes (11) erfasst wird,

   **dadurch gekennzeichnet,**

   - **dass** ein Wärmeübertragungsverhalten, insbesondere ein thermischer Widerstand, einer Grenzschicht (15) des Fluids (12) an einer inneren Wand (16) des Leitungsabschnittes (11) anhand von zumindest einer Stoffeigenschaft und/oder zumindest eines Wertes einer Zustandsgröße des Fluids (12) ermittelt wird und
   - **dass** die Temperatur des Fluids (12) anhand des Wärmeübertragungsverhaltens der Grenzschicht (15), eines Wärmeübertragungsverhaltens, insbesondere eines thermischen Widerstandes, des Leitungsabschnittes (11), der Temperatur des Leitungsabschnittes (11) und der Referenztemperatur ermittelt wird.

2. Verfahren nach Anspruch 1,
   **dadurch gekennzeichnet,**

**dass** das Wärmeübertragungsverhalten der Grenzschicht (15) mithilfe der Nußeltzahl zur Beschreibung eines Strömungszustandes des Fluids (12) berechnet wird.

3. Verfahren nach Anspruch 1 oder 2,
   **dadurch gekennzeichnet,**
   **dass** die Stoffeigenschaft des Fluids (12) durch zumindest eine Messung bestimmt wird.

4. Verfahren nach einem der vorhergehenden Ansprüche,
   **dadurch gekennzeichnet,**
   **dass** das Wärmeübertragungsverhalten des Leitungsabschnittes (11) anhand einer Materialeigenschaft des Leitungsabschnittes (11) bestimmt wird, wobei die Materialeigenschaft des Leitungsabschnittes (11) durch zumindest eine Messung erfasst wird.

5. Verfahren nach einem der vorhergehenden Ansprüche,
   **dadurch gekennzeichnet,**
   **dass** die Stoffeigenschaft des Fluids (12) mithilfe einer ersten Eingabeschnittstelle (31) erfasst wird.

6. Verfahren nach einem der vorhergehenden Ansprüche,
   **dadurch gekennzeichnet,**
   **dass** ein Wert einer das Wärmeübertragungsverhalten des Leitungsabschnittes (11) beeinflussenden Größe mithilfe der ersten oder einer zweiten Eingabeschnittstelle erfasst wird.

7. Verfahren nach einem der vorhergehenden Ansprüche,
   **dadurch gekennzeichnet,**
   **dass** ein Wert einer Prozessgröße eines Prozesses, in welchem das Fluid als Medium verwendet wird, mithilfe der ersten, zweiten oder einer dritten Eingabeschnittstelle erfasst wird und die Temperatur des Fluids (12) zusätzlich mithilfe des Wertes der Prozessgröße berechnet wird.

8. Verfahren nach Anspruch 7,
   **dadurch gekennzeichnet,**
   **dass** die Prozessgröße eine Reynoldszahl einer durch das Fluid gebildeten Strömung ist.

9. Verfahren nach Anspruch 7,
   **dadurch gekennzeichnet,**
   **dass** die Prozessgröße eine Prandtlzahl einer durch das Fluid (12) gebildeten Strömung ist.

10. Verfahren nach Anspruch 7,
    **dadurch gekennzeichnet,**
    **dass** die Prozessgröße eine Nußeltzahl einer durch das Fluid (12) gebildeten Strömung ist.

11. Verfahren nach einem der vorhergehenden Ansprüche,
    **dadurch gekennzeichnet,**
    **dass** eine Neigung des Leitungsabschnittes (11) erfasst wird und in Abhängigkeit der Neigung eine Warnung für einen Benutzer ausgegeben wird, wobei die Warnung eine Information über eine Genauigkeit der ermittelten Temperatur des Fluids (12) enthält.

12. Verfahren nach einem der vorhergehenden Ansprüche,
    **dadurch gekennzeichnet,**
    **dass** eine Angabe (51) zur Typisierung des Fluids (12) erfasst wird und die Stoffeigenschaft des Fluids (12) mithilfe der Angabe (51) bestimmt wird.

13. Verfahren nach einem der vorhergehenden Ansprüche,
    **dadurch gekennzeichnet,**
    **dass** die Stoffeigenschaft des Fluids (12) temperaturabhängig bestimmt wird.

14. Verfahren nach Anspruch 13,
    **dadurch gekennzeichnet,**
    **dass** die Stoffeigenschaft des Fluids (12) in Abhängigkeit einer geschätzten Temperatur des Fluids (12), insbesondere anhand der Temperatur des Leitungsabschnittes (11), ermittelt wird und die Temperatur des Fluids (12) zunächst in Abhängigkeit der geschätzten Temperatur bestimmt wird.

**15.** Verfahren nach Anspruch 14,
**dadurch gekennzeichnet,**
**dass** die Temperatur des Fluids (12) erneut ermittelt wird, wobei die Stoffeigenschaft des Fluids (12) in Abhängigkeit der zuvor ermittelten Temperatur des Fluids (12) bestimmt wird.

**16.** Verfahren nach einem der vorhergehenden Ansprüche,
**dadurch gekennzeichnet,**
**dass** ein Wert einer eine Strömung des Fluids (12) beschreibenden Reynoldszahl ermittelt wird, und in Abhängigkeit des Wertes der Reynoldszahl eines von zumindest zwei verschiedenen Modellen zur Berechnung der Nußeltzahl verwendet wird.

**17.** System (22) zur nicht-intrusiven Ermittlung einer Temperatur eines durch einen Leitungsabschnitt (11) strömenden Fluids (12), wobei das System (22) eine Auswertungseinheit (19) und einen ersten Temperatursensor (17) aufweist und die Auswertungseinheit (19) dazu eingerichtet ist,:

- eine Temperatur des Leitungsabschnittes (11) zu erfassen,
- eine mithilfe des ersten Temperatursensors in einem Abstand von einer Oberfläche (14) des Leitungsabschnittes (11) gemessene Referenztemperatur zu erfassen,

**dadurch gekennzeichnet,**
**dass** die Auswertungseinheit (20) dazu eingerichtet ist,

- ein Wärmeübertragungsverhalten, insbesondere einen thermischen Widerstand, einer Grenzschicht (15) des Fluids (12) an einer inneren Wand des Leitungsabschnittes (11) anhand von zumindest einer Stoffeigenschaft und zumindest eines Wertes einer Zustandsgröße des Fluids (12) zu ermitteln,
- die Temperatur des Fluids (12) anhand des Wärmeübertragungsverhaltens der Grenzschicht (15), eines Wärmeübertragungsverhaltens, insbesondere eines thermischen Widerstandes, des Leitungsabschnittes (11), der Temperatur des Leitungsabschnittes (11) und der Referenztemperatur zu ermitteln.

**Claims**

**1.** A method for determining a temperature of a fluid (12) flowing through a pipe section (11), wherein:

- a temperature of the pipe section (11) is determined,
- a reference temperature at a distance (13) from a surface (14) of the pipe section (11) is obtained,

**characterized in that**,

- a heat transfer behaviour, in particular a thermal resistance, of a boundary layer (15) of the fluid (12) on an inner wall (16) of the pipe section (11) is determined on the basis of at least one material property and/or at least one value of a state variable of the fluid (12), and
- the temperature of the fluid (12) is determined on the basis of the heat transfer behaviour of the boundary layer (15), a heat transfer behaviour, in particular a thermal resistance, of the pipe section (11), the temperature of the pipe section (11) and the reference temperature.

**2.** The method according to claim 1,
**characterized in that**,
the heat transfer behaviour of the boundary layer (15) is calculated using the Nusselt number for describing a flow state of the fluid (12).

**3.** The method according to claim 1 or 2,
**characterized in that**,
the material property of the fluid (12) is determined by at least one measurement.

4. The method according to any of the preceding claims,
**characterized in that**,
the heat transfer behaviour of the pipe section (11) is determined on the basis of a material property of the pipe section (11), the material property of the pipe section (11) being obtained by at least one measurement.

5. The method according to any of the preceding claims,
**characterized in that**
the material property of the fluid (12) is obtained using a first input interface (31).

6. The method according to any of the preceding claims,
**characterized in that**,
a value of a variable influencing the heat transfer behaviour of the pipe section (11) is obtained by means of the first or a second input interface.

7. The method according to any of the preceding claims,
**characterized in that**,
a value of a process variable of a process in which the fluid is used as a medium is obtained by means of the first, second or third input interface, and the temperature of the fluid (12) is calculated additionally using the value of the process variable.

8. The method according to claim 7,
**characterized in that**,
the process variable is a Reynolds number of a flow formed by the fluid.

9. The method according to claim 7,
**characterized in that**,
the process variable is a Prandtl number of a flow formed by the fluid (12).

10. The method according to claim 7,
**characterized in that**,
the process variable is a Nusselt number of a flow formed by the fluid (12).

11. The method according to any of the preceding claims,
**characterized in that**,
an inclination of the pipe section (11) is obtained and a warning is output to a user dependent of the inclination, the warning containing an information about an accuracy of the determined temperature of the fluid (12).

12. The method according to any of the preceding claims,
**characterized in that**,
an indication (51) for typing the fluid (12) is recorded and the material property of the fluid (12) is determined using the indication (51).

13. The method according to any of the preceding claims,
**characterized in that**,
the material property of the fluid (12) is determined as dependent on the temperature.

14. The method according to claim 13,
**characterized in that**,
the material property of the fluid (12) is determined dependent on an estimated temperature of the fluid (12), in particular on the basis of the temperature of the pipe section (11), and the temperature of the fluid (12) is first determined dependent the estimated temperature.

15. The method according to claim 14,
**characterized in that**,
the temperature of the fluid (12) is determined again, the material property of the fluid (12) being determined dependent on the previously determined temperature of the fluid (12).

16. The method according to any of the preceding claims,

**characterized in that**,

a value of a Reynolds number describing a flow of the fluid (12) is determined, and depending on the value of the Reynolds number, one of at least two different models is used to calculate the Nusselt number.

**17.** A system (22) for determining a temperature of a fluid (12) flowing through a pipe section (11), the system (22) having an evaluation unit (19) and a first temperature sensor (17), and the evaluation unit (19) being configured:

- to obtain a temperature of the pipe section (11),
- to obtain a reference temperature measured by using the first temperature sensor at a distance from a surface (14) of the pipe section (11),

**characterized in that**,

the evaluation unit (20) is configured,

- to determine a heat transfer behaviour, in particular a thermal resistance, of a boundary layer (15) of the fluid (12) on an inner wall of the pipe section (11) on the basis of at least one material property and at least one value of a state variable of the fluid (12),
- to determine the temperature of the fluid (12) on the basis of the heat transfer behaviour of the boundary layer (15), a heat transfer behaviour, in particular a thermal resistance, of the pipe section (11), the temperature of the pipe section (11) and the reference temperature.

## Revendications

**1.** Procédé de détermination non intrusive d'une température d'un fluide (12) s'écoulant dans une section de conduite (11), dans lequel :

- une température de la section de conduite (11) est déterminée ;
- une température de référence à une distance (13) d'une surface (14) de la section de conduite (11) est détectée,

**caractérisé en ce que**

- un comportement de transfert de chaleur, notamment une résistance thermique, d'une couche limite (15) du fluide (12) sur une paroi interne (16) de la section de conduite (11) est déterminé à partir d'au moins une propriété de matière et/ou d'au moins une valeur d'une variable d'état du fluide (12), et
- la température du fluide (12) est déterminée à partir du comportement de transfert de chaleur de la couche limite (15), d'un comportement de transfert de chaleur, notamment d'une résistance thermique, de la section de conduite (11), de la température de la section de conduite (11) et de la température de référence.

**2.** Procédé selon la revendication 1, **caractérisé en ce que** le comportement de transfert de chaleur de la couche limite (15) est calculé à l'aide du nombre de Nusselt pour la description d'un état d'écoulement du fluide (12).

**3.** Procédé selon la revendication 1 ou 2, **caractérisé en ce que** la propriété de matière du fluide (12) est déterminée par au moins une mesure.

**4.** Procédé selon l'une quelconque des revendications précédentes, **caractérisé en ce que** le comportement de transfert de chaleur de la section de conduite (11) est déterminé à partir d'une propriété de matériau de la section de conduite (11), la propriété de matériau de la section de conduite (11) étant détectée par au moins une mesure.

**5.** Procédé selon l'une quelconque des revendications précédentes, **caractérisé en ce que** la propriété de matière du fluide (12) est détectée à l'aide d'une première interface d'entrée (31).

**6.** Procédé selon l'une quelconque des revendications précédentes, **caractérisé en ce qu'**une valeur d'une variable influençant le comportement de transfert de chaleur de la section de conduite (11) est détectée à l'aide de la première ou d'une deuxième interface d'entrée.

**7.** Procédé selon l'une quelconque des revendications précédentes, **caractérisé en ce qu'**une valeur d'une variable de processus d'un processus, dans lequel le fluide est utilisé en tant que milieu, est détectée à l'aide de la première, de la deuxième ou d'une troisième interface d'entrée, et la température du fluide (12) est en outre calculée à l'aide de la valeur de la variable de processus.

8. Procédé selon la revendication 7, **caractérisé en ce que** la variable de processus est un nombre de Reynolds d'un écoulement formé par le fluide.

9. Procédé selon la revendication 7, **caractérisé en ce que** la variable de processus est un nombre de Prandtl d'un écoulement formé par le fluide (12).

10. Procédé selon la revendication 7, **caractérisé en ce que** la variable de processus est un nombre de Nusselt d'un écoulement formé par le fluide (12).

11. Procédé selon l'une quelconque des revendications précédentes, **caractérisé en ce qu'**une inclinaison de la section de conduite (11) est détectée et, en fonction de l'inclinaison, un avertissement pour un utilisateur est émis, l'avertissement contenant une information sur la précision de la température déterminée du fluide (12) .

12. Procédé selon l'une quelconque des revendications précédentes, **caractérisé en ce qu'**une donnée (51) pour la normalisation du fluide (12) est détectée et la propriété de matière du fluide (12) est déterminée à l'aide de la donnée (51).

13. Procédé selon l'une quelconque des revendications précédentes, **caractérisé en ce que** la propriété de matière du fluide (12) est déterminée en fonction de la température.

14. Procédé selon la revendication 13, **caractérisé en ce que** la propriété de matière du fluide (12) est déterminée en fonction d'une température estimée du fluide (12), notamment à partir de la température de la section de conduite (11), et la température du fluide (12) est tout d'abord déterminée en fonction de la température estimée.

15. Procédé selon la revendication 14, **caractérisé en ce que** la température du fluide (12) est de nouveau déterminée, la propriété de matière du fluide (12) étant déterminée en fonction de la température déterminée auparavant du fluide (12).

16. Procédé selon l'une quelconque des revendications précédentes, **caractérisé en ce qu'**une valeur d'un nombre de Reynolds décrivant un écoulement du fluide (12) est déterminée et, en fonction de la valeur du nombre de Reynolds, un modèle parmi au moins deux modèles différents est utilisé pour le calcul du nombre de Nusselt.

17. Système (22) pour la détermination non intrusive d'une température d'un fluide (12) s'écoulant dans une section de conduite (11), le système (22) comprenant une unité d'évaluation (19) et un premier capteur de température (17), et l'unité d'évaluation (19) étant conçue pour :

  - détecter une température de la section de conduite (11) ,
  - détecter une température de référence mesurée à l'aide du premier capteur de température à une distance d'une surface (14) de la section de conduite (11), **caractérisé en ce que**

l'unité d'évaluation (20) est conçue pour :

  - déterminer un comportement de transfert de chaleur, notamment une résistance thermique, d'une couche limite (15) du fluide (12) sur une paroi interne de la section de conduite (11) à partir d'au moins une propriété de matière et d'au moins une valeur d'une variable d'état du fluide (12),
  - déterminer la température du fluide (12) à partir du comportement de transfert de chaleur de la couche limite (15), d'un comportement de transfert de chaleur, notamment d'une résistance thermique, de la section de conduite (11), de la température de la section de conduite (11) et de la température de référence.

Fig. 1

# Fig. 2

# Fig. 3

# Fig. 4

## Fig. 5

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017131546 A1
- DE 102014019365 A1
- DE 102016105949 A1
- DE 102017122442
- DE 102014012086 A1

**In der Beschreibung aufgeführte Nicht-Patentliteratur**

- New equations for heat and mass transfer in turbulent pipe and channel flow. **VOLKER GNIELINSKI.** International chemical engineering. AIAA Journal, April 1976, vol. 16, 359-368
- Ein neues Berechnungsverfahren für die Wärmeübertragung im Übergangsbereich zwischen laminarer und turbulenter Strömung. **VOLKER GNIELINSKI.** Forschung im Ingenieurwesen-Engineering Research. 1995, vol. 61, 240-248
- VDI-Wärmeatlas. Druckverlust in durchströmten Rohren (section Lab1). Springer-Verlag, 2006
- **THEODORE L. BERGMAN ; ADRIENNE S. LAVINE ; FRANK P.** Fundamentals of Heat and Mass Transfer. John Wiley & Sons, 2011
- Strömungsgesetze in rauhen Rohren, Nikuradse. Forschung auf dem Gebiet des Ingenieurwesens. NACA Technical Memorandum 1292, 1933